# EUROPEAN PATENT APPLICATION

(11) **EP 2 270 690 A1**
(43) Date of publication of application: **05.01.2011**
(21) Application number: 10167696.3
(22) Date of filing: 29.06.2010
(51) Int. Cl.: G06F 17/30

(54) **Name searching apparatus with incremental input**

(30) Priority: 30.06.2009 JP 2009154509
(71) Applicant: CLARION Co., Ltd., Bunkyo-ku, Tokyo 112-8608 (JP)
(72) Inventor: Uchida, Takayuki, Tokyo 100-8220 (JP); Kawamata, Yukihiro, Tokyo 100-8220 (JP); Sasaki, Hiroto, Tokyo 100-8220 (JP); Tomobe, Osamu, Tokyo 100-8220 (JP); Hayashi, Akio, Tokyo 112-8608 (JP)
(74) Representative: MERH-IP Matias Erny Reichl Hoffmann

(57) **Abstract**

In a destination search function, a narrow search function (110) for displaying (140) the number of hits and next candidates, when an index having data on the number of hits and the next candidate characters is held and a narrow search is speeded up referring to the index during a search. Only about a narrow search result in which the hit numbers is large such that a search time is elongated when referring to numbers, indexes in which the number of hits and next candidate characters as the narrow search result are computed are previously stored. At the time of performing the narrow search (110), when the number of hits is small and the numbers and the next candidates are not registered, the numbers is counted. When the number of hits and the next candidate characters are registered in the index, the narrow search results are computed by using its registration result.

## Description

### BACKGROUND OF THE INVENTION

### Field of the Invention

The present invention relates to a name searching apparatus of a place name or a point of interest (POI) data, and is applicable to a technical field beginning with a navigation system having updatable map data.

### Description of the Related Art

A function of searching a POI suited to a preference or purpose of a user is provided for a car navigation system and a communication terminal, and becomes important. A POI search function of the car navigation system is divided into two main functions. A first function is a narrow search function which narrows down POI candidates, as a destination, obtained by inputting a search keyword via the user, and a second function is a display function which displays this narrowed POI list after narrowing down the POI candidates.

Among the above-described functions, the narrow search function displays the number of hits of the POI and next candidate characters based on the search keyword input by the user. The search keyword input by the user means a keyword such as a Japanese syllabary of a POI name input using a keyboard, an area of the POI, and a category indicating a type of the POI. The next candidate characters mean a candidate list of characters following characters of a POI name input by the user. The user updates, whenever inputting a Japanese syllabary of the POI name using keys, the next candidate characters and the number of hits of the POI which begins with an input character by the narrow search function. In the narrow search, a keyboard is displayed on a screen of a display unit and at first, all keys of the keyboard on the screen are displayed to be bright, whereby the user can feed data using all the keys. When characters are input, the number of hits of the POI is updated for each addition of the input character. Also about the next candidate characters, only keys of the next candidate characters following a last input character are displayed to be bright, and the user can feed data. Further, in the function for displaying the narrowed POI list, when a POI narrowed by the narrow search function is displayed as a list, the display is performed in the order corresponding to the POI ID (Identifier).

For the purpose of realizing the narrow search function at high speed, there is used the above-described method for previously holding as the navigation data an index having the number of hits and the next candidate character data and referring to the index during the search. However, there is a problem that when the index has the number of hits and next candidate character data corresponding to all the search keywords, the number of patterns of the search keywords is enormous and therefore, an index size becomes large.

As a method to cope with this above-described problem, JP-A-2007-11438 discloses a technique where the number of hits and next candidate characters stored in the index are narrowed down up to only the number of specific characters such as, for example, a first character, thereby deleting the index size. Also, JP-A-2007-11438 discloses a technique where when computing the number of hits and next candidate characters not stored in the index, the number of hits and the next candidate characters are computed with reference to records one by one during the search.

JP-A-2008-191798 discloses a technique where when a destination such as a POI name is supplied to a car navigation system, the number of hits and the next candidate characters are computed with reference to POI data one by one and a display state such as a size of the next candidate characters is changed based on a ratio of the number of hits.

Further, JP-A-2003-316784 discloses a technique where the number of hits and the next candidate characters are computed without index data on the number of hits with reference to records one by one during the search. Also, JP-A-2003-316784 discloses a technique where when the number of hits is extremely large, computation of the number of hits is terminated, thus reducing a waiting time of the user by the sacrifice of the computation of the number of correct hits.

However, there is a problem that in JP-A-2007-11438 disclosing a technique for storing the number of hits and the next candidate characters up to the number of specific characters, when the number of hits is still large at the time of narrowing down a search up to the number of characters not stored in the index, a time required for counting the POI data and a time required for sorting data at the time of displaying the narrowed POI list are elongated.

There is a problem that in JP-A-2008-191798, in the case where the number of hits is large, since measures fail to be taken, the search time is elongated.

Further, there is a problem that in JP-A-2003-316784, when the number of hits is more than or equal to a specific number, a display of the search time is quickly performed without counting data and therefore, the number of correct hits provided by a conventional car navigation system is not output.

To cope with the above-described problem, the proposed name searching apparatus of the present invention provides a search method for allowing speeding up of the narrow search suppressing an index size.

### SUMMARY OF THE INVENTION

To accomplish the above-described objects, according to one aspect of the present invention, there is provided a name searching apparatus. This apparatus includes a search data switch unit using a narrow index recording a narrow search result in addition to a search unit and input unit of name data. The search data switch unit switches a processing of referring to an index previously having a narrow search result with a processing of sequentially referring to the name data and computing the narrow search result based on a size of a search time of the narrow search.

The name searching apparatus includes data on the number of hits and the next candidate characters with respect to only the search keyword where a computation time of the number of hits of a POI is more than or equal to a fixed value. As a result, when storing only the search keyword where the search time of the narrow search is more than a fixed value, the name searching apparatus can speed up the narrow search suppressing the index size. Further, the name searching apparatus can be designed in consideration of restrictions on system resources of a main storage unit or an auxiliary storage unit as well as on a display time of the search results.

The name searching apparatus of the present invention can speed up a searching processing and shorten a search result response time to the user in the narrow search at the time of searching a destination using a car navigation system.

### BRIEF DESCRIPTION OF DRAWINGS

FIG. 1 is a system configuration diagram of a car navigation system according to the present invention.
FIG. 2 illustrates a data structure of each table described in the present embodiment.
FIG. 3 is a flowchart of a narrow search processing.
FIG. 4 illustrates a display example of a display unit.
FIG. 5 is a flowchart of a display process 1.
FIG. 6 illustrates a data structure of each table of a temporary storage unit.
FIG. 7 is a flowchart of a display processing 2.
FIG. 8 illustrates a data structure of each table described in the present embodiment.
FIG. 9 is a flowchart of a narrow search result data preparation processing.
FIG. 10 is a flowchart of a subroutine SUB01.
FIG. 11 is a flowchart of a subroutine SUB02.
FIG. 12 is a flowchart of a subroutine SUB03.
FIG. 13 is a flowchart of a subroutine SUB04.

### DESCRIPTION OF THE EMBODIMENTS

One embodiment according to the present invention will be described below with reference to the accompanying drawings.

### [First Embodiment]

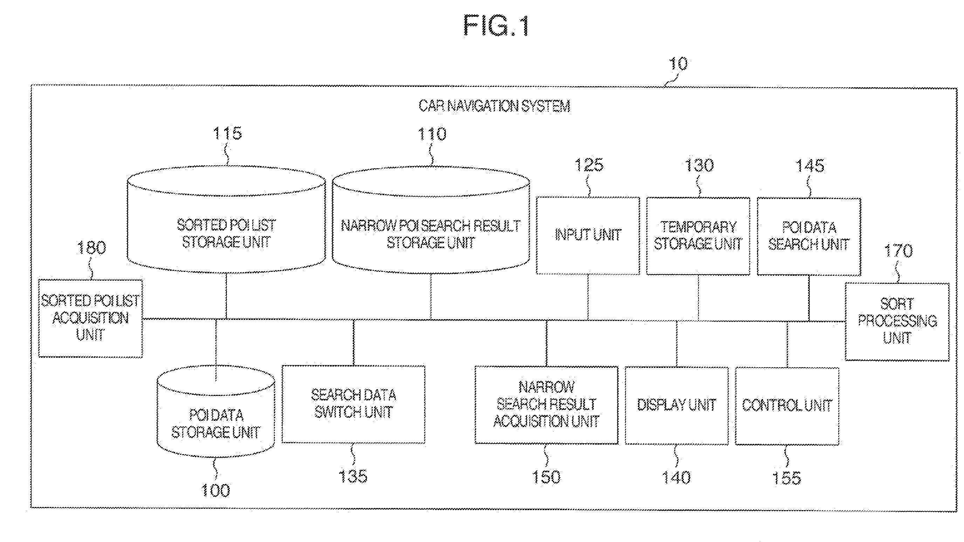

FIG. 1 illustrates the entire configuration of a name searching apparatus or car navigation system 10 using a name search technique according to the present invention. As a name being a search target, this car navigation system performs a search using as a target a POI name specified at the time of setting a destination.

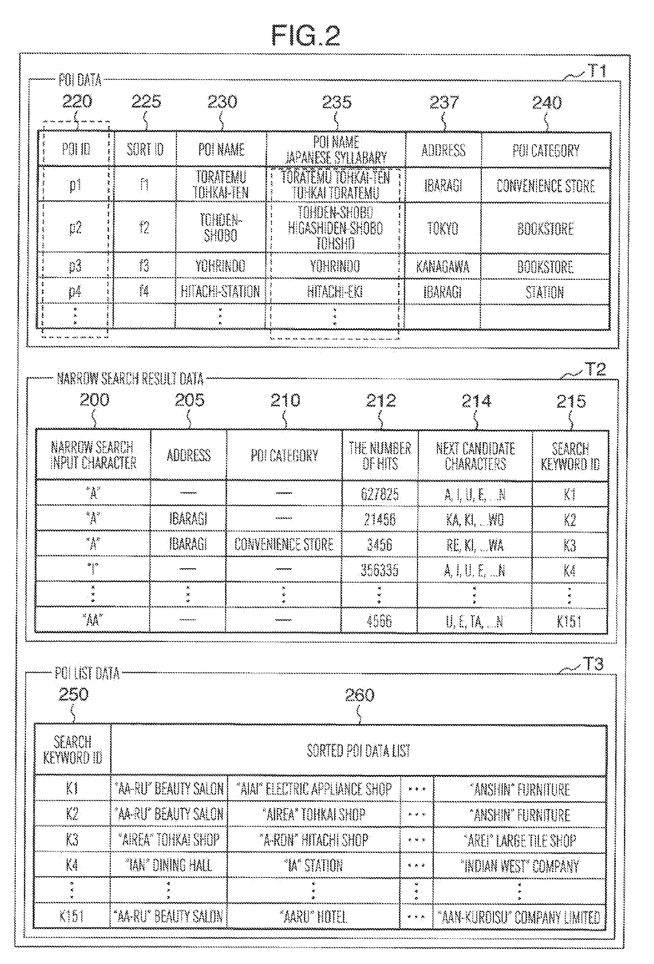

A POI data storage unit 100 stores therein POI data T1 with a data structure as in a table illustrated in FIG. 2. A variety of data on one POI in a line within a table of the POI data T1 is stored, and another data block can be obtained from one data block. This POI data includes data such as a POI ID for at least uniquely identifying a POI, a Japanese syllabary of a POI name (hereinafter, described as a POI name Japanese syllabary) for performing a search via a user, a POI name, term, and title about the POI name used at the time of displaying a search result, a sort ID indicating an order of the presentation at the time of presenting a POI list, a POI address, and a POI category indicating a type of a POI.

Further, the POI data storage unit 100 can refer to data mutually so as to refer to the sort ID 225, the POI name 235, and the POI name Japanese syllabary 235 from data on the POI category 240 and the address 237 or, on the contrary, so as to refer to the sort ID 225 and the POI category 240 from the POI name Japanese syllabary 235. By this function, the POI data can be searched and the number of hits of the POI data can be obtained using as a search keyword a value of the POI name Japanese syllabary, the sort ID, and the POI category. In addition, among data blocks included in the table of the POI data T1, the POI name Japanese syllabary 235 may have a plurality of Japanese syllabaries such as a formal name and another name with respect to one POI. When the POI name Japanese syllabary 235 has a plurality of Japanese syllabaries, a desired POI can be searched and computed even using another name or a formal name at the time of searching the POI name Japanese syllabary. For example, "Toratemu Tohkai-ten" having p1 as the POI ID in the first line of a table of the POI data T1 can be searched even using the formal name of "Toratemu Tohkai-ten" or the another name of "Tohkai Toratemu".

Suppose that a plurality of Japanese syllabaries are registered with respect to one POI as in the first and second lines of a table of the POI data T1. As to data stored in the POI data storage unit 100, when a narrow search of the POI is performed using the Japanese syllabary as a search key, there is the possibility that the duplicated POIs are found and the number of hits of the Japanese syllabary and the number of the real POIs fail to be coincided with each other. For example, with respect to the POI data of the POI data storage unit 100 in FIG. 2, when a narrow search is performed using the Japanese syllabary beginning with "to", four of "Toratemu Tohkai-ten", "Tohkai Toratemu", "Tohden-shobo", and "Tohsho" are found as the Japanese syllabary beginning with "to". When POI names corresponding to four of these Japanese syllabaries are obtained, they are "Toratemu Tohkai-ten", "Toratemu Tohkai-ten", "Tohden-shobo", and "Tohden-shobo", respectively, and as a result, the search result includes the duplicated POIs. Here, a term "-shobo" means a term "bookstore". To cope with the above-described problem, for the purpose of computing the number of hits of the POI, there is performed a processing of eliminating the POIs having duplicated POI IDs from the search results, and as a result, the number of the left POIs is required to be counted. In the above-described example, since the respective POI IDs are p1, p1, p2, and p2, the POI IDs in which duplication is eliminated are p1 and p2, and therefore, the number of hits of the POI is two.

Note, however, that when the Japanese syllabaries hit by the narrow search fail to be associated with the duplicated POIs, the number of the POIs is matched with the number of the search results using the Japanese syllabary, and therefore, the processing for elimination of duplication is not required. For example, the search results of the Japanese syllabary 235 beginning with "hi" in the search keyword are two of "Higashiden-shobo" and "Hitachi-eki". Since the POI IDs are p2 and p4, and also the number of the corresponding POIs is two, the processing for elimination of duplication is not required. Here, a term "-eki" means a term "a railroad station".

In the processing for elimination of duplication , the POI ID to be deduplicated is required to be referenced one by one and compared with the other POI IDs of the search results. Therefore, a processing time proportional to the number (the number of the Japanese syllabaries hit by an input character string) of the POI IDs before the processing for elimination of duplication is required.

A narrow POI search result storage unit 110 is configured by storage media such as a large capacity hard disc capable of holding a memory without a power source. Data indicating keywords for the narrow search at the time of performing the narrow search of the POI data storage unit 100, the search keyword ID allocated to its search keywords, the number of hits of the POI satisfying the search keywords, and data on the next candidate characters are registered in the narrow POI search result storage unit 110. Further, the narrow POI search result storage unit 110 stores therein narrow search result data T2 with a data structure as in a table illustrated in FIG. 2. Through this narrow search result data T2, the number of hits 212, the next candidate characters 214, and the search keyword ID 215 as results of the narrow search can be referenced from a narrow search input character 200, address 205, and POI category 210 serving as the search keyword of the narrow search.

For example, the first line of the narrow search result data T2 means the following. That is, when an input character of the narrow search keywords is "a", the number of the POIs having the Japanese syllabary of a POI name beginning with "a" is 627825 in the POI data stored in the POI data storage unit 100 and characters next to "a" are "a, i, u, e, ..., n" in the Japanese syllabaries of the POIs included therein. Similarly, the second line of the narrow search result data T2 means the following. That is, the number of the POI where an input character of the narrow search keywords is "a" and the address is Ibaragi is 21456 in the POI data stored in the POI data storage unit 100 and characters of the Japanese syllabary next to "a" are "ka, ki, ..., wo" in the Japanese syllabaries of the POIs included therein.

The narrow search result data T2 stores, in the items of the address 205 and the POI category 210, data "-" for meaning that the search keywords are not specified in the case where the address 205 and the POI category 210 as the items of the search keywords except for the input characters are not specified. When the narrow search has both patterns of the search keyword of the case where the search keyword items such as the address and the POI category are specified and the case where they are not specified, data which means that the search keywords are not specified as in the data "-" is required to be stored.

When the POI data T1 of the POI data storage unit 100 is referenced one by one and the narrow search is performed, the search results are previously prepared in relation to the narrow search that a time more than the required upper limit is required and stored as the narrow search result data T2 in the narrow POI search result storage unit 110. The narrow search time is a processing time at the time of computing the number of hits of the POI, and is a total value of a reference time of the Japanese syllabaries 235 of all the POI names hit by the search using an input character of the POI data T1 and further, when the elimination of duplication is required, a processing time required for the processing for elimination of duplication. The reference time of the POI name Japanese syllabaries 235 and the processing time of the processing for elimination of duplication get longer to be proportional to the number of hits of the POI name Japanese syllabaries 235. Here, suppose that one proportional coefficient of the number of hits with respect to the reference time of the POI name Japanese syllabaries 235 of the POI names is set to "a" and another proportional coefficient of the number of hits with respect to the processing time of the processing for elimination of duplication is set to "b". Values of the proportional coefficients "a" and "b" are determined by a search performance of a POI data search unit 145. As the search performance is higher, the values of the proportional coefficients are smaller. When these proportional coefficients "a" and "b" are used, the search time in the case where the processing for elimination of duplication is not required is equal to "a × the number of hits of the POI name Japanese syllabaries". On the other hand, the search time in the case where the processing for elimination of duplication is required is equal to "(a+b) × the number of hits of the POI name Japanese syllabaries".

When the upper limit of the time required for the narrow search is set to "t", conditions for storing narrow search results in the narrow search result data T2 are represented as an inequality "the number of hits of the POI name Japanese syllabaries>t/a" in the case where the processing for elimination of duplication is not required. On the other hand, the conditions are represented as an inequality "the number of hits of the POI name Japanese syllabaries>t/(a+b)" in the case where the processing for elimination of duplication is required. From now, "t/a" is called the upper limit of the number of hits without the processing for elimination of duplication, and "t/(a+b)" is called the upper limit of the number of hits with the processing for elimination of duplication. The narrow POI search result storage unit 110 stores therein the upper limit of the number of hits with the processing for elimination of duplication at the time of preparing the narrow search result data T2. As to whether to require the processing for elimination of duplication at the time of computing the number of hits of the POI, the POI data T1 is required to be searched and determined at the time of preparing the narrow search result data T2.

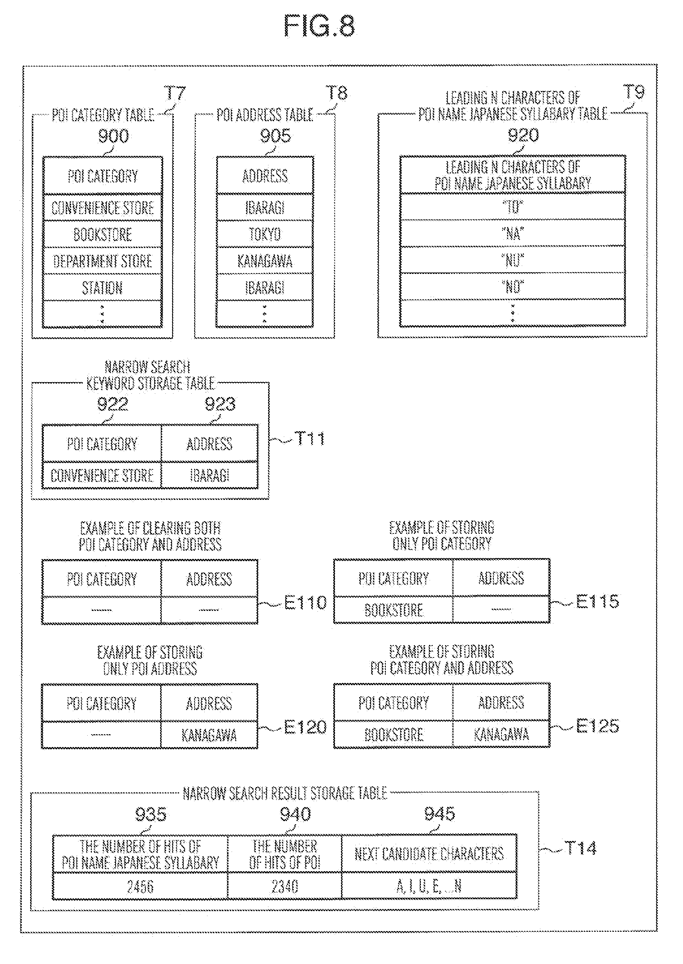

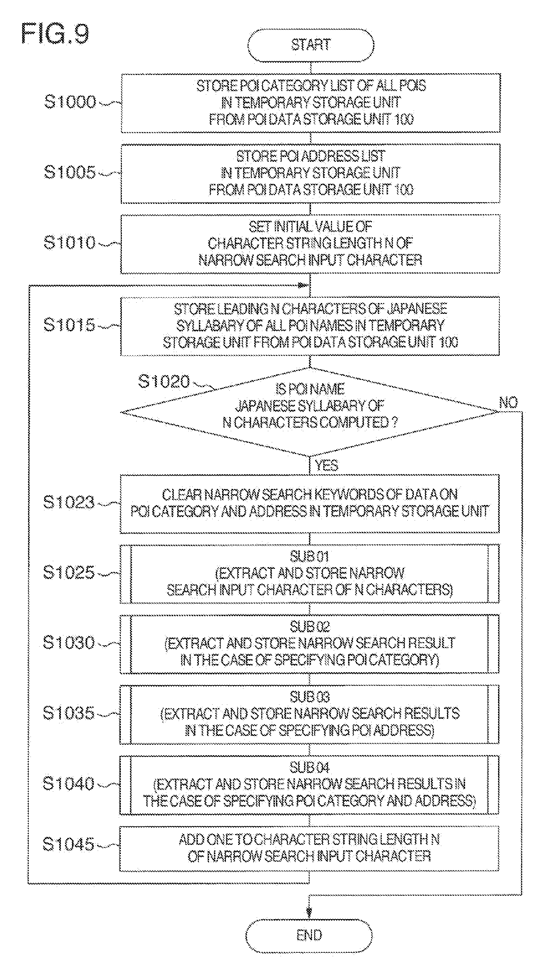

A processing of preparing a table of the narrow search result data T2 from the POI data T1 of the POI data storage unit 100 will be described below with reference to FIGS. 9 to 11. FIG. 8 illustrates a data structure of each table used in these processings.

A process flow of FIG. 9 represents a processing for preparing a table of the narrow search result data T2 of the narrow POI search result storage unit 110. In step 51000, data on the POI category 210 stored in the POI data T1 of the POI data storage unit 100 is first read out and all types of the POI category where duplication is eliminated are stored in a POI category table T7 of the temporary storage unit 130. FIG. 8 illustrates a data structure of a POI category table T7 of the temporary storage unit 130. Next, in step S1005, addresses of all types where duplication is eliminated from data in the item of the address 237 stored in the POI data T1 of the POI data storage unit 100 are stored in a POI address table T8 of the temporary storage unit 130. FIG. 8 illustrates a data structure of the POI address table T8.

In step S1010, for the purpose of extracting a narrow search input character 200 stored in a table of the narrow search result data T2 of the narrow POI search result storage unit 110, an initial value of a character string length n to be extracted is stored in the temporary storage unit 130. Since the character string length n is increased to 1, 2, 3, ... in a successive processing loop, one is stored as the initial value.

Next, the processing loop in relation to the character string length n of the input character will be described. In step S1015, all character strings stored in the POI data T1 of the POI storage unit 100 as a value of the POI name Japanese syllabary is searched using as a target only its leading n characters according to values of the character string length n to be extracted in step S1015 and the leading n characters resulting from eliminating duplicated character strings from search results is stored in the table T9 of the leading n characters of the POI name Japanese syllabary stored in the temporary storage unit 130. FIG 8 illustrates a data structure of a table storing leading one character of the POI name Japanese syllabary as a table T9 of leading n characters of the POI name Japanese syllabary.

In step S1020, whether a character string of leading n characters or more in the POI name Japanese syllabary is found in the search of step S1015 is determined. If Yes, the process goes to step S1023. On the other hand, if No, it is considered that there is no POI name of leading n characters or more and the process is terminated.

In step S1023, both data blocks of the POI category 922 and the address 923 of the narrow search keyword storage table T11 stored in the temporary storage unit 130 are cleared. This narrow search keyword storage table T11 is a data table for storing the POI category and address specified as the narrow search keywords. A state where both the data blocks of the POI category 922 and the address 923 are cleared is represented by data "-", and the data means that the data blocks are cleared and the items are not specified by the search keywords. E110, E115, E120, and E125 of FIG. 8 illustrate examples where values of the search keywords are stored in the narrow search keyword storage table T11. E110 illustrates a state where the data blocks of the POI category and the address are cleared, E115 illustrates a state where the search keyword of only the POI category 922 is set, E120 illustrates a state where the search keyword of only the POI address 923 is set, and E125 illustrates a state where both the search keywords of the POI category and the address are set. In step S1023, since both the data blocks of the POI category and address of the narrow search keyword storage table T11 are cleared, the state of E110 is represented. Accordingly, in the following step S1025, both the narrow search keywords of the POI category and the address are not set and the search is performed.

The above-described step S1025 is a processing for performing a search about data on leading n characters of the POI name Japanese syllabary, and calls a subroutine SUB01 which stores a search result in the narrow POI search result storage unit 110.

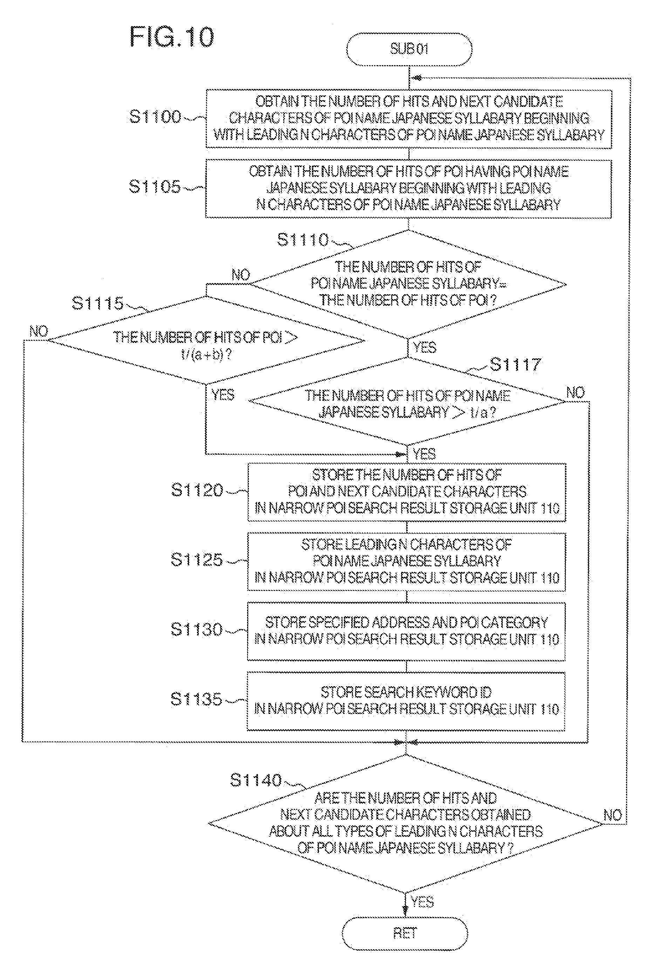

FIG. 10 illustrates a processing of the subroutine SUB01. In the processing of SUB01 illustrated in FIG. 10, in step S1100, the POI corresponding to data on the POI category 922 and address 923 set in the narrow search keyword storage table T11 is performed as a target as follows. About the character strings read out from the table T9 of leading n characters of the POI name Japanese syllabary, a search is performed with respect to the POI name Japanese syllabary 235 of the POI data T1. Further, the number of hits and the next candidate characters are obtained and stored, respectively, in the number of hits 935 and next candidate characters 945 of the POI name Japanese syllabary stored in the narrow search result storage table T14 of the temporary storage unit 130. The narrow search result storage table T14 is a table which stores narrow search results in the temporary storage unit 130. The next candidate character obtains a character next to the leading n characters of the POI name Japanese syllabary, that is, if (n+1)th characters from the head are present in the POI name Japanese syllabary, a list of its characters. For example, if POIs satisfying the search keywords are four POIs having f1 to f4 of the sort IDs of the POI data T1, when the leading n character of the POI name Japanese syllabary read out from the table T9 of the leading n character of the POI name Japanese syllabary illustrated in FIG. 8 is "to", the number of hits of the Japanese syllabary is four and the next candidate characters are "ra" and "u".

In step S1105, the number of hits of the POI associated with the Japanese syllabary searched in step S1100 is computed. The POI ID associated with the Japanese syllabary searched in step S1100 is searched and the number of hits of the POI is set to the number of the POI IDs where duplication is eliminated. The number of hits of the POI is stored in the number of hits of the POI 940 stored in the narrow search result storage table T14 of the temporary storage unit 130.

In step S1110, whether the number of hits of the POI computed in step S1105 is equal to the number of hits of the POI name Japanese syllabary computed in step S1100 is determined. The number of hits of the POI name Japanese syllabary 935 and the number of hits of the POI 940 stored in the narrow search result storage table T14 are compared with each other. If both values are equal to each other, the process goes to step S1117, and on the other hand, if both values are not equal to each other, the process goes to step S1115.

In step S1115, when a computation time of the number of hits of the POI computed in step S1105 exceeds the upper limit "t" of the search time, the process is branched. If the number of hits of the POI name Japanese syllabary 935 stored in the narrow search result storage table T14 exceeds the upper limit t/(a+b) of the number of hits with the processing for elimination of duplication , the process goes to step S1120. If No, the process skips a processing of registering the narrow search result in a table of the narrow search result data T2 and goes to step S1140. In step S1117, if the computation time of the number of hits of the POI name Japanese syllabary computed in step S1100 exceeds the upper limit "t" of the search time, the process is branched. If the number of hits of the POI name Japanese syllabary 935 of the narrow search result storage table T14 exceeds the upper limit t/a of the number of hits without the processing for elimination of duplication , the process goes to process S1120. If No, the process skips a processing of registering the narrow search result in a table of the narrow search result data T2 and goes to step S1140.

In step S1120, lines are added to a table of the narrow search result data T2 of the narrow POI search result storage unit 110, and the number of hits and next candidate characters corresponding to the narrow search input characters are stored in the lines. The number of hits of the POI 940 and next candidate characters 945 stored in the narrow search result storage table T14 are stored in the number of hits 212 and next candidate characters 214 of the lines added to the narrow search result data T2, respectively.

In step S1125, the POI name Japanese syllabary as the narrow search keywords is stored in the narrow POI search result storage unit 110. For the purpose, the leading n characters of the POI name Japanese syllabary used in step S1100 as the narrow search keywords are stored in the narrow search input character 200 of the line added to the narrow search result data T2 in step S1120. Similarly, in step S1130, the POI category and the address as the narrow search keywords are stored in the narrow POI search result storage unit 110. For the purpose, values of the POI category 922 and address 923 stored in the narrow search keyword storage table T11 are stored in the POI category 210 and address 205 of the lines added to the narrow search result data T2, respectively.

In step S1135, the search keyword ID for uniquely identifying the narrow search keywords at the time of computing the search result stored in the narrow search result data T2 is stored in the narrow search result data T2 of the narrow POI search result storage unit 110. In this search keyword ID, a serial number is allocated to the narrow search keyword whenever storing one narrow search result in the narrow search result data T2. For the purpose, the search keyword ID is stored in the temporary storage unit 130. In step S1135, a value updated by adding one to a value of the search keyword ID stored in the temporary storage unit 130 is stored in the search keyword ID 215 of the line added to the narrow search result data T2 of the narrow POI search result storage unit 110 in step S1120. Further, this updated value of the search keyword ID is stored also in the temporary storage unit 130 and the search keyword ID is overwritten.

In step S1140, completion determination of the narrow search is performed. Here, there is determined whether the narrow search is performed using as the search keywords all of the leading n characters of the POI name Japanese syllabary stored in the table T9 of the leading n characters of the POI name Japanese syllabary. If the narrow search is performed with respect to all the characters, the process returns to the processing of the calling origin of the subroutine SUB01. If No, the process returns to step S1100.

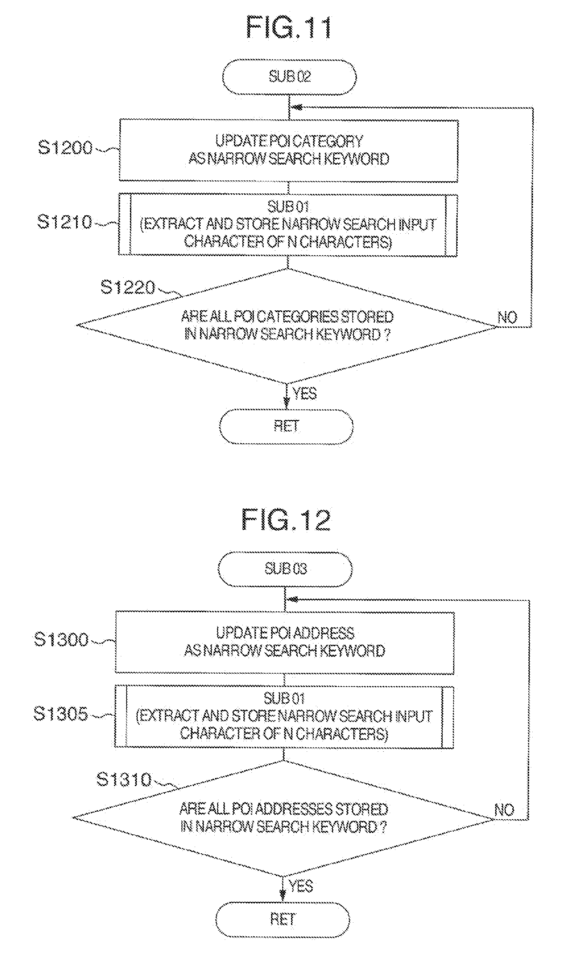

In the processing of FIG. 9, if step S1025 in which the subroutine SUB01 is called is terminated, the process goes to step S1030. In step S1030, the subroutine SUB02 is performed. In the subroutine SUB02, the narrow search result in which the POI category is specified is stored in the narrow search result data T2 of the narrow POI search result storage unit 110. FIG. 11 illustrates a process flow of the subroutine SUB02.

In step S1200 of the subroutine SUB02 illustrated in FIG. 11, the POI category is set in the narrow search keywords. For the purpose, one POI category which is not yet stored in the narrow search keyword storage table T11 is read out from the POI category table T7, and the search keywords are stored only in the POI category 922 of the narrow search keyword storage table T11 as in E115.

In step S1210, the subroutine SUB01 is called, and the narrow search of the POIs falling under the POI category of the narrow search keyword storage table T11 specified in step S1200 as a target is performed using data of the leading n characters of the POI name Japanese syllabary. If a processing time exceeds the upper limit "t" of the search time, its search results are stored in the narrow search keyword storage table TI of the narrow POI search result storage unit 110. If the processing of the subroutine SUB01 is terminated, the process goes to step S1220.

In step S1220, for the purpose of performing completion determination of the narrow search, whether the narrow search is terminated with respect to all the POI categories stored in the POI category table T7 is determined. If the search is terminated, the process terminates the subroutine SUB02 and returns to the processing of the calling origin. If No, the process returns to step S1200.

If step S1030 in which the subroutine SUB02 is called is terminated in the processing of FIG. 9, the process goes to step S1035. In step S1035, the subroutine SUB03 is performed. The subroutine SUB03 stores the narrow search results in which the POI address is specified in the narrow search result data T2 of the narrow POI search result storage unit 110. FIG. 12 illustrates a process flow of the subroutine SUB03.

In step S1300 of the subroutine SUB03 illustrated in FIG. 12, the POI address is set in the narrow search keywords. For the purpose, one address which is not yet stored in the narrow search keyword storage table T11 is read out from the POI address table T8, and the search keywords are stored only in the address 923 of the narrow search keyword storage table T11 as in E120.

In step S1305, the subroutine SUB01 is called, and the narrow search of the POIs falling under the address of the narrow search keyword storage table T11 specified in step S1300 as a target is performed using data of the leading n characters of the POI name Japanese syllabary. If the processing time exceeds the upper limit "t" of the search time, its search results are stored in the narrow search keyword storage table T11 of the narrow POI search result storage unit 110. If the processing of the subroutine SUB01 is terminated, the process goes to step S1310.

In step S1310, for the purpose of performing completion determination of the narrow search, whether the narrow search is terminated with respect to all the addresses stored in the POI address table T8 is determined. If Yes, the process terminates the subroutine SUB03 and returns to the processing of the calling origin. If No, the process returns to step S1300.

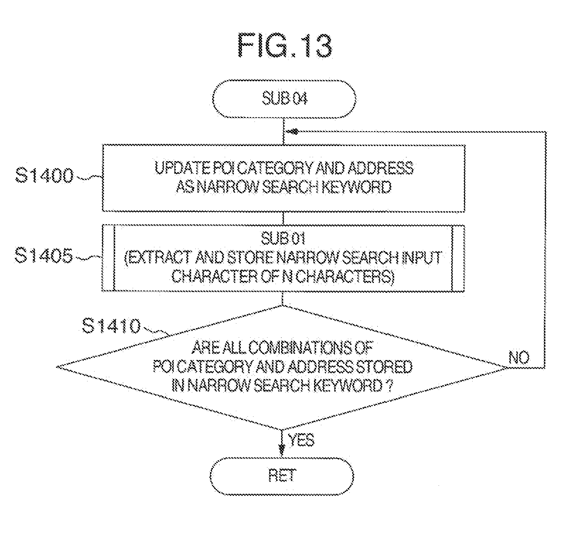

If step S1035 in which the subroutine SUB03 is called is terminated in the processing of FIG. 9, the process goes to step S1040. In step S1040, the subroutine SUB04 is performed. The subroutine SUB04 performs the narrow search in which the POI category and the address are specified, and stores the search results in the narrow search result data T2 of the narrow POI search result storage unit 110. FIG. 13 illustrates a process flow of the subroutine SUB04.

In step S1400 of FIG. 13, the POI category and the address are set in the narrow search keywords. For the purpose, one combination of the POI category and address which are not yet stored in the narrow search keyword storage table T11 is read out from the POI category table T7 and the address table T8, and the combination thereof is stored in the POI category 922 and address 923 of the narrow search keyword storage table T11 as in E125.

In step S1405, the subroutine SUB01 is called, and the narrow search of the POIs falling under the POI category and address of the narrow search keyword storage table T11 specified in step S1400 as a target is performed using data of the leading n characters of the POI name Japanese syllabary. If the processing time exceeds the upper limit "t" of the search time, its search results are stored in the narrow search keyword storage table T11 of the narrow POI search result storage unit 110. If the processing of the subroutine SUB01 is terminated, the process goes to step S1410.

In step S1410, for the purpose of performing completion determination of the narrow search, there is determined whether the narrow search is terminated with respect to combinations of all the respective values stored in the POI category 900 of the POI category table T7 and the POI address 905 of the POI address table T8. If the narrow search is terminated, the process terminates the subroutine SUB04 and returns to the processing of the calling origin. If the narrow search is not terminated, the process returns to step S1400.

In the processing of FIG. 9, if step S1040 in which the subroutine SUB04 is called is terminated, the process goes to step S1045. Since the next narrow search is performed in step S1045, one is added to the character string length of the narrow search input character to be extracted, and the process returns to step S1015.

As can be seen from the above discussion, the narrow search result data T2 which is stored in the narrow POI search result storage unit 110 is previously generated.

In the POI data T1 stored in the POI data storage unit 100, all the POI data blocks satisfying the respective narrow search keywords including a combination of data of the narrow search input character 200, address 205, and POI category 210 which are registered in the narrow search result data T2 stored in the narrow POI search result storage unit 110 are sorted in each search keyword ID of the relevant search keyword in the order corresponding to the sort ID of the POI. The sorted POI data blocks are stored as the POI list data T3 illustrated in FIG. 2 in the sorted POI list storage unit 115. For the purpose of obtaining the sorted list of the POI data from the POI list data T3, the POI list associated with the search keyword IDs 250 of the POI list data T3 is obtained. In the search keyword IDs 250 of the POI list data T3, the same IDs as the search keyword IDs 215 of the narrow search result data T2 are stored. Accordingly, the search keyword IDs 215 corresponding to the narrow search input character 200, address 205, and POI category 210 of the narrow search result data T2 are obtained. When the search keyword IDs 250 of the POI list data T3 are searched by the above-described IDs, the sorted POI data list 260 satisfying the search keywords set in the narrow search input character 200, address 205, and POI category 210 of the narrow search result data T2 can be obtained.

In the narrow search result data T2 of the narrow POI search result storage unit 110, all the narrow search results are not necessarily stored. The reason is that when the processing time at the time of performing the narrow search exceeds the upper limit "t" of the search time, its search results are previously stored in the narrow search result data T2 of the narrow POI search result storage unit 110. To cope with the above-described problem, when at the time of performing the narrow search, the narrow search result acquisition unit 150 searches the narrow search result data T2 of the narrow POI search result storage unit 110 and the search results are not found, the search data switch unit 135 instructs the POI data search unit 145 to search the POI data storage unit 100.

A display unit 140 is a unit which presents as presentation data to a user the search keywords set via an input unit 125 by a user and the narrow search results. A unit used for a display may be a visual display such as an LCD display and a cathode-ray tube. Or, alternatively, a speaker may be used for presentation via voices. For generating presentation information, a video card which converts character data into a displayable form on a screen may be used in the case of presenting video data, or a voice synthesis software which converts character data into audio data may be used in the case of presenting audio data.

The input unit 125 is a unit which receives input data via a user such as an input character through the narrow search, the POI category, and the address, and which converts the input data into an electric signal. A unit such as a touch panel for performing an input operation by pushing a mechanical switch or a button displayed on the display unit, or a unit which recognizes voices of the user may be used as the input unit. In the case of the touch panel, a portion having displayed thereon the search keywords of the POI is touched on the display unit 140 by hand so as to supply the search keywords to this unit. When performing a selection operation in the case of the mechanical switch, a physical button is pushed so as to supply the search keywords to this unit. When using the unit which recognizes voices, it is required that a microphone is provided on the input unit 125, and voices of the user are converted into an electric signal. Further, the search keywords input by the user via voices are required to be extracted from an electric signal using software for recognizing voices.

The temporary storage unit 130 is a storage area provided for temporarily storing data read out from the POI data storage unit 100 or the narrow POI search result storage unit 110. The temporary storage unit 130 may be provided on a main storage apparatus (not illustrated), or configured by special semiconductor storage elements. The temporary storage unit 130 used in the present invention may be configured by a nonvolatile memory, or a memory in which when power is turned off, data is erased. Further, data can be preferably read and written from and to the temporary storage unit 130 at high speed as compared with a large capacity storage medium such as a hard disc configuring the POI data storage unit 100.

The POI data search unit 145 has a function for searching the POI data storage unit 100 and computing the narrow search results based on the search keywords such as the input character, the address, and the POI category in the narrow search. The POI data search unit 145 will be specifically described using the POI data T1 illustrated in FIG. 2 of the POI data storage unit 100. The POI data search unit 145 refers to the address 237, POI category 240, and POI name Japanese syllabary 235 of the POI data T1, and counts the number of all the POIs (hits) matched with the POI name Japanese syllabary beginning with the input character among the POIs matched with the address and POI category input by the user. Further, when referring to the POI name Japanese syllabary 235, the next candidate characters of the Japanese syllabary next to the input character of the user are obtained with respect to all the POIs matched with the search keywords input by the user. For example, the POI data search unit 145 performs the narrow search using as a target four POIs being f1 to f4 of the sort IDs of the POI data T1. When the input character of the search keywords via the user is "to", the number of hits of the POI is two and the next candidate characters are "ra" and "u".

The narrow search result acquisition unit 150 searches the narrow search result data T2 of the narrow POI search result storage unit 110, and obtains the narrow search result previously computed at the time of preparing data. A method for obtaining the narrow search result will be specifically described using the narrow search result data T2 illustrated in FIG. 2. The narrow search result acquisition unit 150 searches the narrow search result data T2 using the input character, address, and POI category input by the user at the time of the narrow search, and obtains one data block on the number of hits and next candidate characters of the relevant search results. Note, however, that as can be seen from the above discussion, since all the narrow search results are not necessarily stored in the narrow search result data T2, there is the possibility that the number of the relevant search results is zero.

The control unit 155 has a function for controlling each unit of the car navigation system 10. Specifically, the control unit 155 performs management for transmitting and receiving data between units and control for causing each unit to function according to a present timing. The control unit 155 performs control, for example, in the case of transferring data on the search results of the POI data search unit 145 to the temporary storage unit 130, or transferring the POI data stored in the temporary storage unit 130 to the display unit 140 for presentation.

The sort processing unit 170 sorts based on a value of the sort ID 600 the extraction POI data T4 being the POI data copied to the temporary storage unit 130 searched by the POI data search unit 145. The sort results are stored in the temporary storage unit 130 as the sorted extraction POI data T5, and can be displayed on the display unit.

The sorted POI list acquisition unit 180 obtains a sorted POI list from the sorted POI list storage unit 115 in the order corresponding to the sort ID of the POI using as a search key the search keyword ID 250 of the POI list data T3, and copies the obtained sorted POI list to the temporary storage unit 130.

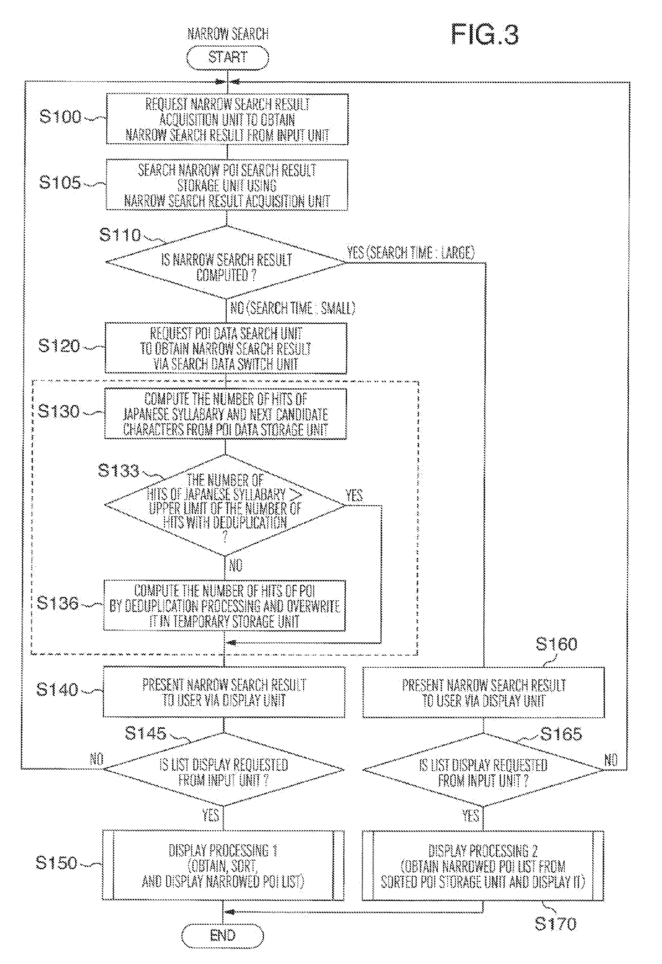

A processing of the narrow search based on a control according to the control unit 155 of FIG. 1 will be described below with reference to flowcharts of FIGS. 3, 5, and 7.

FIG. 3 is a flowchart illustrating the entire flow of the narrow search processing. In step S100, the input unit 125 requests the narrow search result acquisition unit 150 to obtain the narrow search results. The input unit 125 requests the narrow search results as well as transmits the search keywords such as the address, POI category, and input character set by the user to the narrow search result acquisition unit 150. The input unit 125 requests the narrow search results according to a timing necessary for displaying the narrow search result at the time when the user supplies the input character as the search keywords to the input unit 125 and narrows down the search keywords.

In step S105, the narrow search result acquisition unit 150 searches the narrow POI search result storage unit 110 based on the search keywords produced from the input unit 125. When the search results are stored in the narrow search result data T2, the narrow search result acquisition unit 150 obtains each value of the number of hits 212 and next candidate characters 214 of the narrow search results, and the search keyword ID 215 used at the time of displaying the POI list.

In step S110, the narrow search result acquisition unit 150 determines whether the search result is found in step S105. If the search result is found, the narrow search result acquisition unit 150 obtains the search keyword IDs corresponding to the search results from the narrow search result data T2, and copies the obtained search keyword IDs to the temporary storage unit 130. The process then goes to step S160. If the search result is not found, the process goes to step S120.

Step S120 is a processing in the case where the narrow search result is not found in step S105, and corresponds to the case where the narrow search is performed by the search keywords in which the number of hits is smaller than a threshold. If the search result is not found in the narrow search result data T2 of the narrow POI search result storage unit 110, the search data switch unit 135 requests the POI data search unit 145 to perform the narrow search using the search keywords requested in step S100 and obtain its search results.

In step S130, the POI data search unit 145 searches the POI data T1 of the POI data storage unit 100 according to the requested search keywords, and refers to the POI data one by one. Further, the POI data search unit 145 computes the number of hits and next candidate characters of the POI name Japanese syllabary 235 using the same processing method as that at the time of preparing the narrow search result data T2, and stores the computed number of hits and the next candidate characters in the temporary storage unit 130.

In step S133, whether the processing for elimination of duplication is necessary for the number of hits computed in step S130 and the search time exceeds the upper limit even if performing the processing for elimination of duplication is determined and the process is branched. If the number of hits of the Japanese syllabary exceeds the upper limit t/(a+b) of the number of hits with the processing for elimination of duplication, the process goes to step S140. If No, the process goes to step S136. In addition, the upper limit of the number of hits with the processing for elimination of duplication is assumed to be previously stored in the narrow POI search result storage unit 110 at the time of preparing the narrow search result data T2, and is read from the narrow POI search result storage unit 110 and used.

In step S136, the processing for elimination of duplication is performed and the number of hits of the POI is computed. For the purpose, the POI ID corresponding to the POI name Japanese syllabary searched in step S130 is obtained, and the processing for elimination of duplication about the POI ID is performed, thus computing the number of hits of the POI. The computed number of hits of the POI is overwritten in the number of hits of the Japanese syllabary stored in the temporary storage unit 130 in step S130 and stored in the temporary storage unit 130.

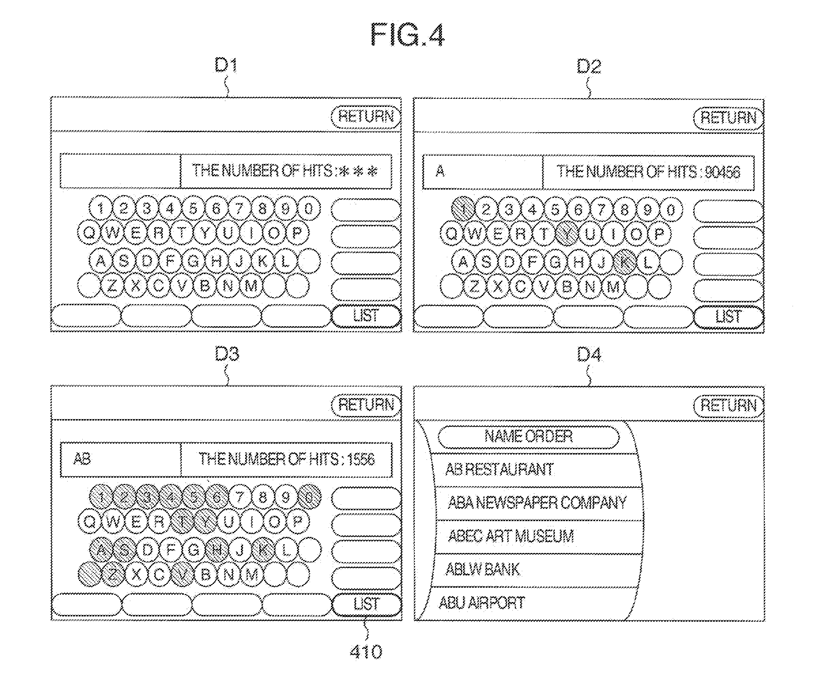

In step S140, the display unit 140 displays values of the number of hits and next candidate characters stored in the temporary storage unit 130 in steps S130 and S136. D1 to D3 of FIG. 4 illustrate examples where presentation of the narrow search result is visually performed using the display unit 140. D1 to D3 of FIG. 4 illustrate examples where at the time of performing the narrow search, the user pushes a keyboard configured by a touch panel displayed on a screen of the display unit 140 and inputs a character string to be searched by one character. Immediately after the narrow search is started, all keys are first displayed to be bright as in D1 of FIG. 4 and the input of an arbitrary character is received. Whenever a key is touched and an input character is added by one character, the number of hits of the POI is updated as in the screens from D2 to D3. Also in the next candidate characters, only the next candidate characters next to the input character are displayed to be bright and key input is enabled. The other keys are displayed to be dark and the screen is updated so as not to receive the input.

In step S145, the display unit 140 determines whether the user who views the number of hits of the narrow search result displayed in step S140 requests a list display of the POI of the narrow search result. If the list display of the POI is requested, the process goes to step S150. If the list display of the POI is not requested, the process returns to step S100 and waits for an input from the user. As to the request of the list display, for example, the user pushes a "display" button 410 of lower right of the screens of D1 to D3 illustrated in FIG. 4, and requests the list display of the POI to the input unit 125. A method for requesting the list display may be a touch panel as in the "display" button 410, a mechanical switch, or a request using voices.

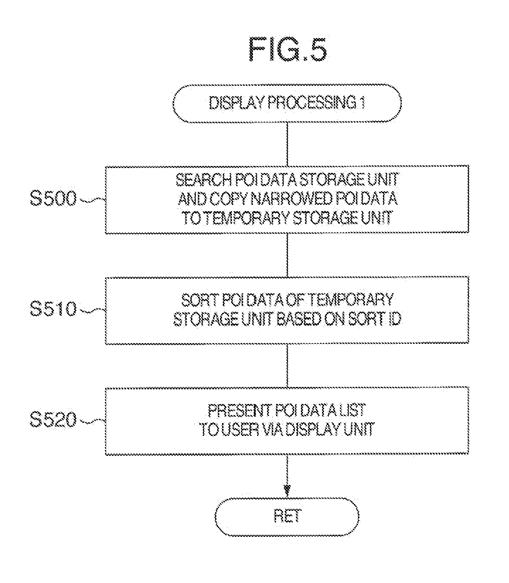

In step S150, the subroutine of the display processing 1 for performing the list display of the POI in the case where the search time is short is called. FIG. 5 illustrates a flowchart of the display processing 1.

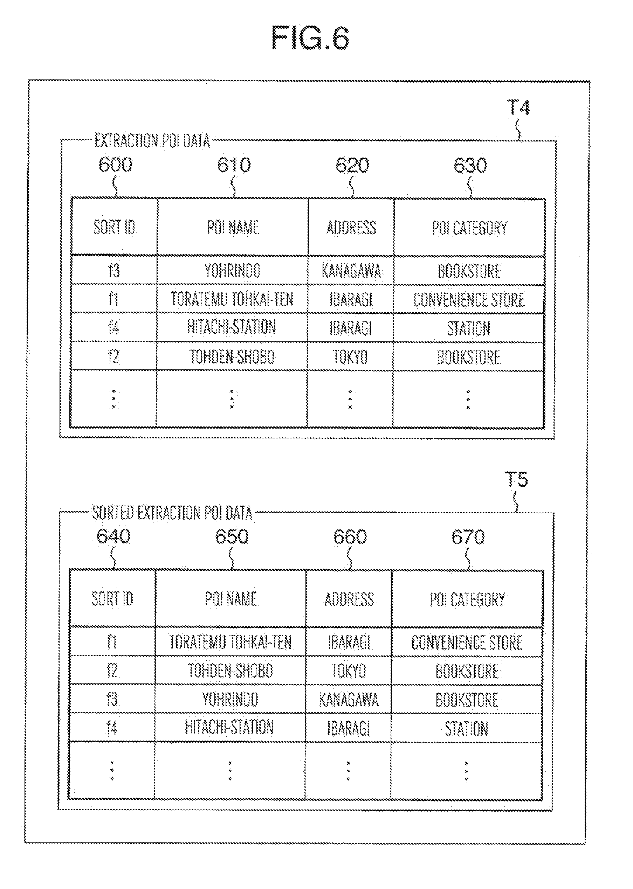

In a flowchart of the display processing 1 illustrated in FIG. 5, in step S500, the POI data T1 is searched using the search keywords of the narrow search input by the user in step S100 of FIG. 3 and the POI data satisfying the search keywords is copied to the temporary storage unit 130, thus generating the extraction POI data T4 as illustrated in FIG. 6. The extraction POI data T4 illustrates the POI data copied to the temporary storage unit 130 and further, the sort ID necessary for sort, the POI name used for display, and data on the address and the POI category are copied from the POI data T1 to the temporary storage unit 130.

In step S510, the temporary storage unit 130 sorts each POI data of the extraction POI data T4 in the order corresponding to the sort ID 600 using the sort processing unit 170. As a method used for sort, use of a method for sorting data as fast as possible such as a quick sort permits the search time to be deleted among methods for comparing data of the sort ID 600 and sorting data in ascending order or in descending order. As a result of sorting data, the temporary storage unit 130 stores therein the POI data in which sorting is terminated in the order corresponding to the sort ID as the sorted extraction POI data T5 illustrated in FIG. 6.

In step S520, the temporary storage unit 130 sends to the display unit 140 the POI data such as the POI name used for display, the POI address, and the POI category in the sorted extraction POI data T5 sorted in step S510, and presents the above-described POI data to the user. As a method for presenting the POI data to the user, a method for presenting the POI name as a list on the screen as illustrated in D4 of FIG. 4 according to the sort order may be used, or a method for presenting the POI data by voices according to the sort order may be used. After completing the processing of step S520, the process terminates the display processing 1 and returns to the original routine. The process is then terminated.

On the other hand, in step S160, the display unit 140 displays the number of hits and next candidate characters obtained in step S105 based on the narrow search result previously stored in the narrow search result data T2 of the narrow POI search result storage unit. The display unit 140 performs the same processing as that of the above-described step S140 about the display of the number of hits and the next candidate characters.

In step S165, the display unit 140 determines whether the user who views the number of hits of the narrow search results displayed in step S160 requests the list display of the POI of the narrow search results. If the user requests the display of the POI list, the process goes to step S170. If the user does not request the display of the POI list, the process returns to step S100 and waits for an input from the user again. In addition, the same description as that of the above-described step S145 is provided also in relation to the request of the list display.

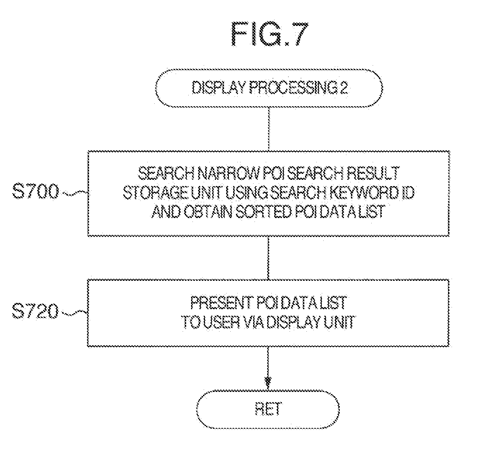

In step S170, the display unit 140 calls the subroutine of the display processing 2 for performing the list display of the POI when the number of hits are large. FIG. 7 is a flowchart illustrating the display processing 2.

In the flowchart of the display processing 2 illustrated in FIG. 7, in step S700, the sorted POI list acquisition unit 180 searches the POI list data T3 of the sorted POI list storage unit 115 using as a search key the search keyword ID copied to the temporary storage unit 130. Further, the sorted POI list acquisition unit 180 copies to the temporary storage unit 130 the POI data stored in the sorted POI data list 260 corresponding to the search keyword ID 250 of the POI list data T3.

In step S720, the display unit 140 presents to the user the list data of the sorted POI data copied to the temporary storage unit 130 in step S700. As the method for presenting the POI data to the user, a method for presenting as a list the POI names lined according to the sort order based on the sorted POI data list on the above-described screen as illustrated in D4 of FIG. 4 may be used. Or alternatively, a method for presenting the POI names to the user using voices according to the sort order may be used.

As can be seen from the above discussion, the narrow search results are previously prepared in relation to the search keywords such that the search time increases. When performing the narrow search interactively, the previously prepared search results are used in the case where the search time increases. In the case where the search time does not increase, the search is actually performed, thereby preventing a response time from being reduced and suppressing the search results from increasing.

A search technology of the POI name described in this present embodiment can be applied to not only a car navigation system mounted on a vehicle, but also a PND (Portable Navigation Device) for searching the POI names or a portable mobile terminal as represented by a cellular phone.

The proposed name searching apparatus of the present invention can be applied to an in-car navigation system, a stationary computer, and a portable mobile terminal.

It should be further understood by those skilled in the art that although the foregoing description has been made on embodiments of the invention, the invention is not limited thereto and various changes and modifications may be made without departing from the spirit of the invention and the scope of the appended claims.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A name searching apparatus (10) comprising:
an input unit (125) which sequentially receives a target name for narrowing down search results;
an output unit which outputs the number of the search results;
a POI data storage unit (100) which stores therein at least data on the POI name of a search target POI and search key words of the POI name;
a POI data search unit (145) which searches the POI data storage unit (100) and computes the number of the search results using a search keyword including an input character and the next candidate characters of the POI name based on an input of a user using the input unit (125);
a narrow POI search result storage unit (110) which registers the number of the search results to be previously searched and computed in relation to the search keyword in which a search time of a POI narrow search is more than or equal to a fixed value and the next candidate characters of the POI name associated with the search keyword, about the POI data storage unit (100);
a narrow search result acquisition unit (150) which searches the narrow POI search result storage unit (110) and obtains as the search result the number of the search results and next candidate characters of POI name corresponding to the search keyword falling under data input by the user based on the data input by the user using the input unit (125);
a search data switch unit (135) which causes the POI data search unit (145) to search the POI data storage unit (100) if the search results of the narrow POI search result storage unit (110) cannot be obtained using the narrow search result acquisition unit (150); and
a display unit (140) which presents to the user the number of the search results and next candidate characters searched by the POI data search unit (145) or the number of the search results and next candidate characters obtained by the narrow search result acquisition unit (150), computed based on the search keyword input by the input unit (125).

2. The name searching apparatus according to claim 1,
wherein the narrow POI search result storage unit (110) stores therein a search keyword ID for recognizing the search keyword in which the search time of the narrow search of a POI is more than or equal to a fixed value and the number of hits and next candidate characters corresponding to the search keyword ID.

3. The name searching apparatus according to claim 1 or 2, wherein:
at the time of performing a narrow search, if the search time is less than or equal to a fixed value, the search data switch unit (135) causes the POI data search unit (145) to search the POI data storage unit (100) and compute a narrow search result; and
if the search time is more than a fixed value, the search data switch unit (135) causes the narrow search result acquisition unit (150) to search the narrow POI search result storage unit (110) and obtain the narrow search result.

4. The name searching apparatus according to at least one of claims 1 to 3, wherein:
the POI data storage unit (100) further stores therein an address of a search target POI, a category indicating a type of a POI, and a sort order indicating an order at the time of presenting a POI; and
when including an address or category of a POI as data input from the input unit (125), the POI data search unit (145) searches the POI data storage unit (100) including an address or category of the POI to the search keyword;
further comprising:
a sorted POI list storage unit (115) which registers a result of sorting a POI list corresponding to the search results registered by the narrow search result acquisition unit (150) for each search keyword;
a sorted POI list acquisition unit (180) which obtains data of a POI list sorted from the sorted POI list storage unit (115); and
a sort processing unit (170) having a function of sorting POI data searched from the POI data storage unit (100) in the sort order;
wherein, when a display request of a POI name with respect to the search results is input by the input unit (125), data on the sorted POI list or a sort result using the sort processing unit (170) is displayed on the display unit (140).

5. The name searching apparatus according to claim 4, wherein:
at the time of displaying a sort result of a POI list with respect to the search result on the display unit (140), if a sort time of the POI list is less than or equal to a fixed time, the search data switch unit (135) causes the display unit (140) to display a result where the POI data searched from the POI data storage unit (100) using the POI data search unit (145) is sorted using the sort processing unit (170) in the sort order, and
if the sort time of the POI list is more than the fixed value, the search data switch unit (135) causes the display unit (140) to display a list of the sorted POI data obtained by searching the sorted POI list storage unit (115) using the sorted POI list acquisition unit (180).
